# EUROPÄISCHE PATENTSCHRIFT

(11) **EP 1 449 572 B1**
(45) Veröffentlichungstag und Bekanntmachung des Hinweises auf die Patenterteilung: **30.07.2008**
(21) Anmeldenummer: 04100680.0
(22) Anmeldetag: 20.02.2004
(51) Int. Cl.: B01D 35/147, B01D 29/54

(54) **Getriebegehäuse und Fahrzeug**
Gearbox casing and vehicle
Carter de boîte de vitesses et véhicule

(30) Priorität: 21.02.2003 US 372753; 21.02.2003 US 372602
(43) Veröffentlichungstag der Anmeldung: 25.08.2004
(73) Patentinhaber: DEERE & COMPANY, Moline, Illinois 61265-8098 (US)
(72) Erfinder: Smith, Ellis Junior, Rock Hill, SC 29732 (US)
(74) Vertreter: Holst, Sönke

(56) Entgegenhaltungen:
- EP-A- 0 937 868
- EP-A2- 0 477 767
- WO-A-02/32543
- DE-A- 10 113 179
- US-A- 3 469 697
- US-A- 6 024 193

## Beschreibung

Die Erfindung betrifft ein Getriebegehäuse gemäß dem Oberbegriff des Patentanspruchs 1. Die Erfindung betrifft weiterhin ein Fahrzeug mit einem derartigen Getriebegehäuse.

Kleine Fahrzeuge wie beispielsweise Kompakttraktoren weisen häufig Getriebe mit hydrostatischen und oder kupplungsgesteuerten Antriebseinheiten auf. Diese Getriebe hängen von Hydraulikpumpen ab, damit Öl bzw. Hydraulikflüssigkeit von einem Reservoir, das im Getriebegehäuse angeordnet ist, durch Filterelemente zu der Pumpe und zurück in das Getriebe und das Reservoir zirkulieren kann. Üblicherweise sind derartige Reservoire in dem Getriebegehäuse selbst angeordnet.

Da die Hydraulikflüssigkeit, während ihrer Verwendungsdauer durch größere und kleinere Partikel verunreinigt wird, wird die Hydraulikflüssigkeit durch Schmutzfänger bzw. Siebelemente zur Entfernung grober Verunreinigungen und durch Filter geleitet, um die kleineren Verunreinigungen zu entfernen.

In Fahrzeugen, wie sie in der vorliegenden Anmeldung gezeigt werden, sind die Filter bzw. Filterelemente üblicherweise derart ausgebildet, dass sie Verunreinigungen in einer Größenordnung von 60 Mikrometer und größer entfernen können.

Bekannte hydrostatische Systeme an derartigen Fahrzeugen, wie sie beispielsweise die US-A-4, 222, 875 sowie die US-A-4,343,697 zeigen, weisen Siebelemente und Filter auf, welche derart in Serie angeordnet sind, dass die Siebelemente stromaufwärts der Filterelemente angeordnet sind. Zwischen dem Siebelement und dem Filterelement ist ein Bypass- oder Umgehungsventil vorgesehen, um die Hydraulikflüssigkeit, um das Filterelement zu leiten, wenn sie kalt ist, wie dies beispielsweise bei Betriebsbeginn der Fall ist. Zu diesem Zeitpunkt kann die Viskosität der Hydraulikflüssigkeit so hoch sein, dass das in der Pumpe erzeugt Vakuum zu einer Beschädigung oder einem Zusammenbrechen des Filterelements und/oder einem Ausfall der Pumpe führen kann. Das Umgehungsventil dient daher dazu, die Hydraulikflüssigkeit um den Filter zu leiten, bis die Viskosität sinkt und der Pumpenansaugdruck unter einen Wert fällt, mit dem der Filter sicher fertig wird.

Die gattungsgemäße EP-B1-0 477 767 zeigt ein Getriebegehäuse mit einem Ölfilter, der im Wesentlichen aus einem zylindrischen Käfig besteht, der mit einem Sieb umwickelt ist und zu einer Eintrittsöffnung eines zu einer Hydraulikpumpe führenden Ölkanals hin offen ist.

Da die Schmutzfänger und Filter in Serie angeordnet sind, zieht die Pumpe die Hydraulikflüssigkeit immer durch das Siebelement bzw. einen Grobschmutzabscheider, selbst dann, wenn die Hydraulikflüssigkeit warm und die Viskosität niedrig ist. Entsprechend verliert das Hydrauliksystem etwas von seiner Leistungsfähigkeit, da es die Hydraulikflüssigkeit immer durch das Siebelement ziehen muss.

Da die Filterelemente periodisch gewechselt werden müssen, wenn sie mit Verunreinigungen zugesetzt sind, und auch die Siebelemente periodisch gereinigt oder gewechselt werden müssen, wenn sie gefüllt sind, sind die Filter- sowie die Siebelemente außerhalb und angrenzend an das Getriebegehäuse angeordnet, um ihre Zugänglichkeit zu verbessern. Diese Anordnung außerhalb des und/oder angrenzend an das Getriebegehäuse nimmt wertvollen Bauraum ein, der für andere Getriebe-, Motor- und/oder Fahrzeugkomponenten verwendet werden könnte. Da diese Bereiche im Allgemeinen mit derartigen Baugruppen angefüllt sind, kann der Zugang zu dem Filter und den Schmutzfängern manchmal schwierig sein.

Darüber hinaus kann es vorkommen, dass die Pumpe Luft in die Leitungen zieht, wenn die Filter- und Siebelemente bezogen auf das Reservoir ungünstig angeordnet sind und keine konstante Zufuhr von Hydraulikflüssigkeit sichergestellt wird. Dies kann zu Kavitationsproblemen führen.

Die der Erfindung zugrunde liegende Aufgabe wird daher darin gesehen, die genannten Probleme zu überwinden.

Diese Aufgabe wird erfindungsgemäß durch die Lehre der Patentansprüche 1 bzw. 13 gelöst, wobei in den weiteren Patentansprüchen die Lösung in vorteilhafter Weise weiterentwickelnde Merkmale aufgeführt sind.

Auf diese Weise wird ein Hydrauliksystem für Fahrzeuge, wie Kompakttraktoren, und ähnliche Fahrzeuge zur Verfügung gestellt, welches den Aufwand an Leitungen und Halterungen reduziert, der benötigt wird, um die Filter und Siebelemente außerhalb und angrenzend an das Getriebegehäuse und sein Reservoir anzubringen, der den Leckpfad verringert, der Rohrverbindungen zugeordnet ist, die benötigt werden, um die Filter und Schmutzfänger in Serie anzuordnen, und den Bauraum minimiert, der angrenzend an das Getriebegehäuse benötigt wird, um die Filter- und Siebelemente anzubringen und zugänglich zu machen.

Darüber hinaus eliminiert ein derartiges Hydrauliksystem den Verlust an Leistung, der hervorgerufen wird, wenn die Hydraulikflüssigkeit immer durch ein Siebelement gezogen wird.

Hierfür kann das Hydrauliksystem einen wegwerfbaren bzw. Einwegzusammenbau mit Filter- und Siebelementen aufweisen, wobei das Umgehungsventil in das Siebelement integriert sein kann. Dieser Zusammenbau erfordert eine minimale Menge an Metall und kann daher verbrannt werden.

Durch das Umgehungsventil kann bewirkt werden, dass die Hydraulikflüssigkeit um das Filterelement herum und nur durch das Siebelement geleitet wird, wenn die Viskosität der Hydraulikflüssigkeit hoch ist. Das Umgehungsventil schließt, wenn die Viskosität unter einen akzeptablen Wert fällt, so dass das Hydrauliköl nur durch das Filterelement gezogen wird. Auf diese Weise wird einem Leistungsverlust entgegengewirkt.

Der vorzugsweise wegwerfbare Filterzusammenbau kann in einem speziellen Gehäuse in dem Getriebegehäuse vorgesehen sein, so dass er dauerhaft in die Hydraulikflüssigkeit eingetaucht ist. Auf diese Weise wird über den Zusammenbau ein konstanter Hydraulikflüssigkeitsstrom zur Verfügung gestellt und somit das Risiko einer Pumpenkavitation und/oder Leerlaufs verringert.

In der Zeichnung ist ein nachfolgend näher beschriebenes Ausführungsbeispiel der Erfindung dargestellt. Es zeigt:
- Fig. 1: eine perspektivische Darstellung eines Getriebegehäuses mit einer Explosionsdarstellung eines Filterzusammenbaus,
- Fig. 2: eine vergrößerte, perspektivische Darstellung des Filterzusammenbaus,
- Fig. 3: eine teilweise aufgebrochene Ansicht des Filterzusammenbaus,
- Fig.3a: eine weitere vergrößerte Darstellung eines Bereichs, in dem ein Umgehungsventil in dem Filterzusammenbau angebracht ist,
- Fig. 4: eine schematische Darstellung eines Hydrauliksystems mit einem derartigen Filterzusammenbau,
- Fig. 5: eine Schnittdarstellung des Filterzusammenbaus, die einen Hydraulikstrom durch eine Rückhalteinrichtung und ein Umgehungsventil illustriert und
- Fig. 6: eine Schnittdarstellung entsprechend Figur 5, die einen Hydraulikstrom durch einen Filter während eines Normalbetriebs verdeutlicht.

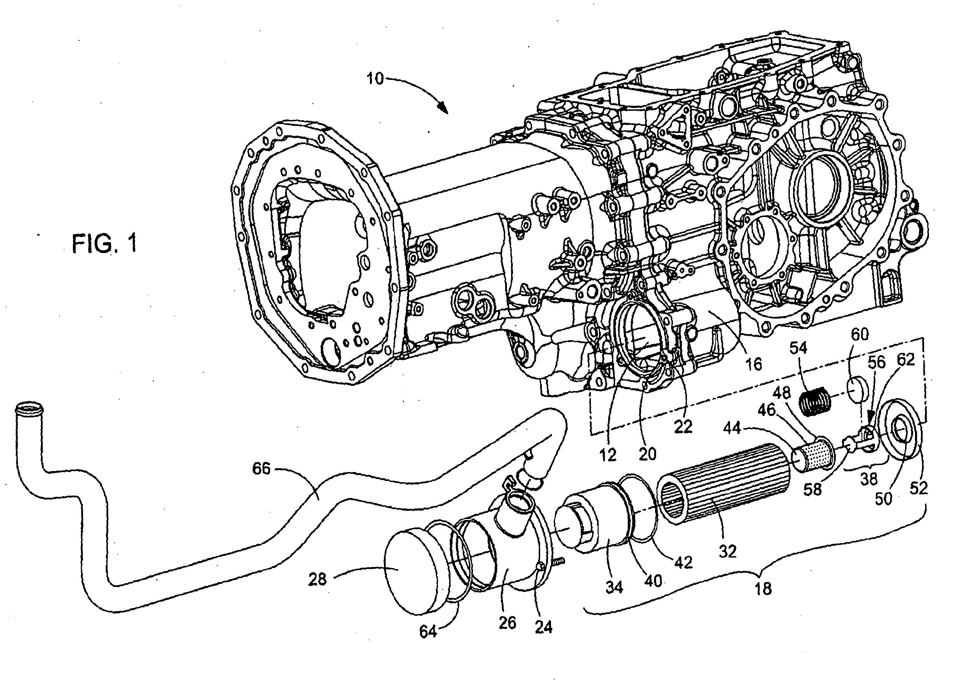

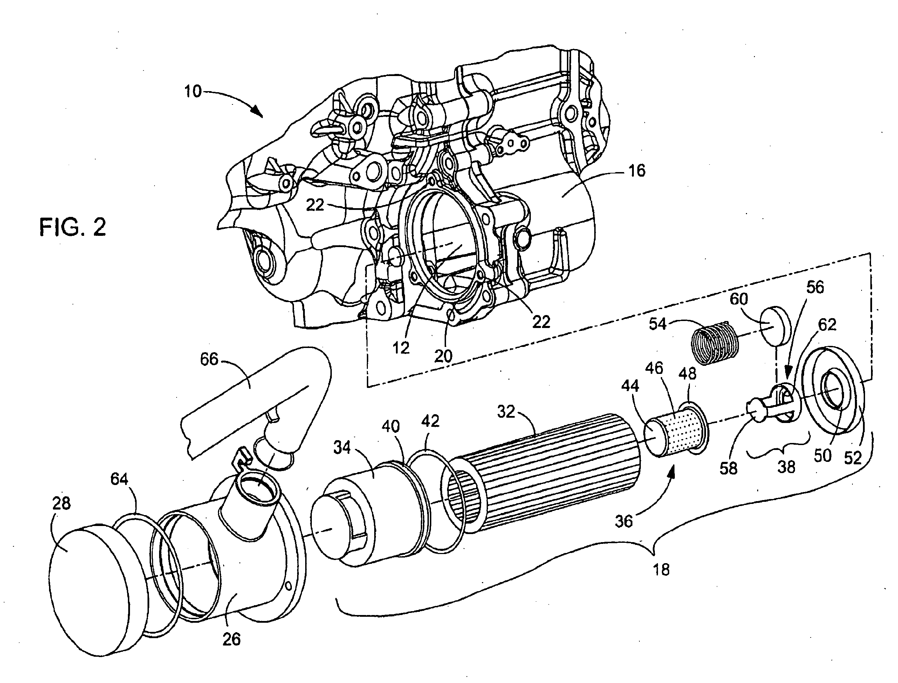

Bezugnehmend auf Figur 1 wird ein Getriebegehäuse 10 gezeigt, das verschiedene Bauteile eines Getriebes sowie einen Hydraulikflüssigkeitsspeicher bzw. ein Reservoir 12 für Hydrauliköl bzw. Hydraulikflüssigkeit, welches durch das Getriebe sowie für verschiedene andere Funktionen des Hydrauliksystems 14 eines Fahrzeugs verwendet wird, beherbergt. Mit Bezug auf Figur 2 ist zu erkennen, dass das Getriebegehäuse 10 in einem unteren, rückwärtigen Bereich ein Filtergehäuse 16 für einen Öl-, Hydraulikflüssigkeitsfilterzusammenbau, der im Folgenden als Filterzusammenbau 18 bezeichnet wird, aufweist. Dieses Filtergehäuse 16 ist derart angeordnet, dass der Filterzusammenbau 18 in dem Reservoir 12, welches in dem unteren Bereich des Getriebegehäuses 10 aufgenommen wird, untergetaucht ist. Eine Öffnung 20 des Filtergehäuses 16 ist im Wesentlichen rund und stellt Aussparungen 22 zur Aufnahme von Schrauben oder ähnlichen Befestigungsmitteln 24 zur Verfügung.

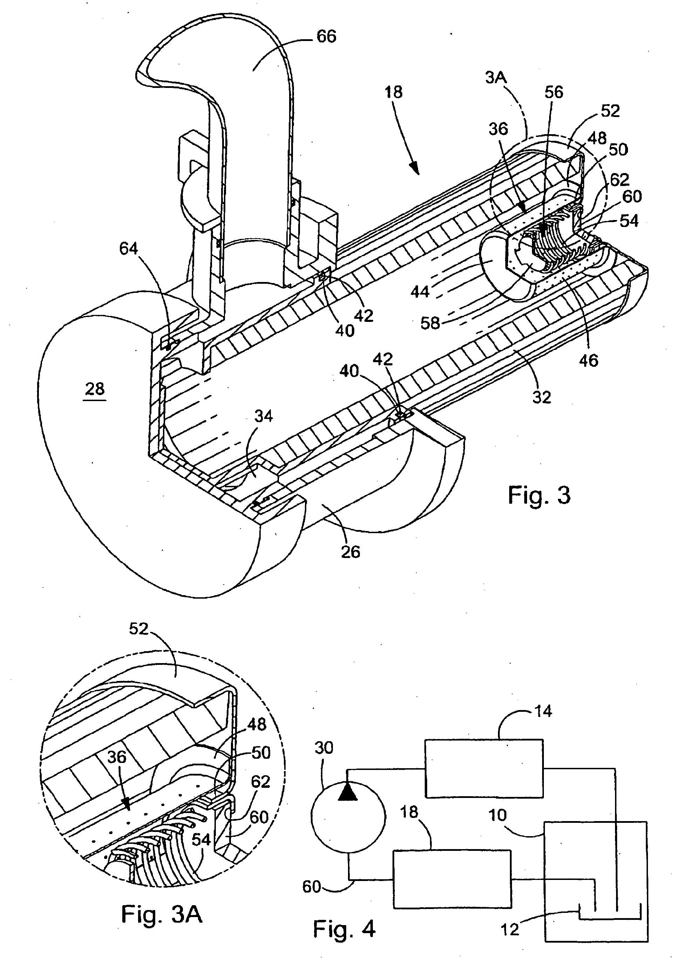

In dem Gehäuse 16 kann der Filterzusammenbau 18 aufgenommen werden, welcher in den Figuren 1 und 2 in einer Explosionsdarstellung gezeigt wird. In Figur 3 wird eine aufgeschnittene Darstellung des Filterzusammenbaus 18 gezeigt, wobei er auf einem gegossenen Filterkopf 26 angeordnet ist. Der Filterkopf 26 ist mit dem Getriebegehäuse 10 lösbar mittels Schrauben 24 verbunden, welche von Gewindebohrungen 22 in dem Getriebegehäuse 10 aufgenommen werden. Der Filterkopf 26 ist daran angepasst, einen aufschraubbaren Endabschluss bzw. einen Deckel 28 aufzunehmen, um es dem Filterzusammenbau 18 zu erlauben, darin einfach eingebaut und in einer vorkragenden Art und Weise in dem Reservoir 12 des Getriebegehäuses 10 aufgenommen zu werden. Der Deckel 28 erlaubt es dem Filterzusammenbau 18, schnell und einfach entfernt zu werden, so dass ein neuer Filterzusammenbau 18 montiert werden kann.

Es wird nun auch auf Figur 4 Bezug genommen, in der ein Hydrauliksystem dargestellt wird, welcher ein in dem Getriebegehäuse 10 angeordnetes Reservoir 12 aufweist. Es wird eine Hydraulikpumpe 30 zur Verfügung gestellt, um Hydraulikflüssigkeit von dem Reservoir 12 anzusaugen, durch den Filterzusammenbau 18 zu ziehen und dann in die verschiedenen Hydrauliksystembestandteile 14 an dem Fahrzeug zu bewegen, bevor sie in das Reservoir 12 zurückkehrt.

Es werden nun wiederum die Figuren 2 und 3 betrachtet, aus denen hervorgeht, dass der Filterzusammenbau 18 ein Filterelement 32, welches in einer Kartusche 34 aufgenommen wird, ein Siebelement 36, dass durch das Filterelement 32 aufgenommen wird, und ein Umgehungsventil 38, welches in dem Siebelement 36 angeordnet ist, aufweist. Die Kartusche 34 ist mit einem U-förmigen Kanal 40 versehen, in dem ein diametraler oder umfangsmäßiger O-Ring bzw. ein Dichtelement 42 aufgenommen wird. Dieses Dichtelement 42 dient dazu, eine flüssigkeitsdichte Verbindung zwischen der Kartusche 34 und dem Filterkopf 26 herzustellen und den Filterzusammenbau 18 passend in dem Filterkopf 26 zu positionieren.
Das Siebelement 36 ist in einem Endbereich des Filterelements 32 angebracht und weist eine Endwand 44 und ein längliches Sieb 46 auf. Das Sieb 46 nimmt die Form einer kleine Öffnungen aufweisenden Schürze mit einem hohlen Kern an. An einem Endbereich des Siebelements 36 ist ein Sicherungsring bzw. ein Sicherungselement 48 vorgesehen. Dieses Sicherungselement 48 ist vorzugsweise in eine durch eine Schulter 50 gebildete Öffnung eingepresst, die an den einen Kartuschendeckel 52 angeformt ist (siehe Figuren 1, 2 und 3a).

Das in dem Siebelement 36 angeordnete Umgehungsventil 38 weist eine Feder 54 auf, welche in einem Federgehäuse 56 angeordnet ist. Das Federgehäuse 56 weist an seinem einen Endbereich einen Federrückhalter 58 auf, an dem die Feder 54 anliegt. Der andere Endbereich der Feder 54 liegt an einem Verschlusselement 60 an, das wiederum an einem Sitz 62 anliegt, welcher an einem Endbereich des Federgehäuses 56 vorgesehen ist.

Wenn er montiert ist, wird der Filterzusammenbau 18 in dem Filterkopf 26 abgestützt und erstreckt sich in einer vorkragenden Art und Weise in das Reservoir 12 in dem Getriebegehäuse 10. Der Filterkopf 26 ist an dem Getriebegehäuse 10 mittels Schrauben 24 befestigt, um den Filterzusammenbau 18 in dem Reservoir in den Getriebegehäuse 10 an der richtigen Position zu halten. Der Deckel 28 ist auf dem Filterkopf 26 durch Aufschrauben gesichert. Ein weiterer O-Ring bzw. ein Dichtelement 64 ist vorgesehen, um den Deckel 28 gegenüber dem Filterkopf 26 abzudichten.

Während eines Betriebes dient die Hydraulikpumpe 30 dazu, Hydraulikflüssigkeit von dem Reservoir 12 in dem Getriebegehäuse 10 durch den Filterzusammenbau 18, einen Ansaugstutzen 66 entlang und zu der Hydraulikpumpe 30 zu ziehen. Von der Hydraulikpumpe 30 wird die Hydraulikflüssigkeit 12 zu den verschiedenen Hydrauliksystembauteilen 14 und schließlich zurück in das Reservoir 12 in dem Getriebegehäuse 10 geleitet, wo es dann bereitsteht, um anderen Bauteilen des Getriebes während des Betriebes zu dienen.

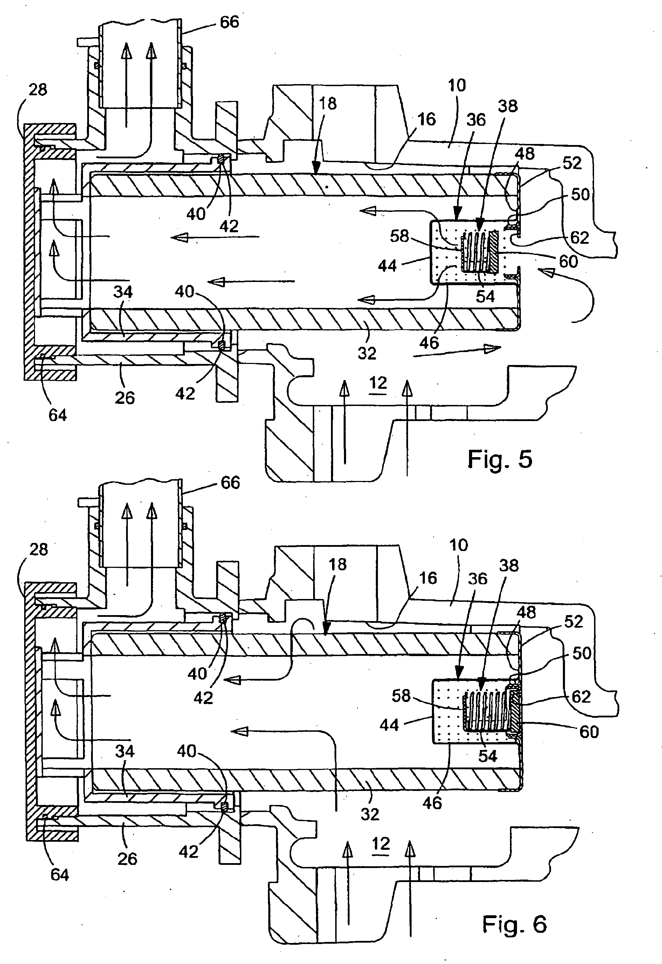

Wenn das Fahrzeug zum ersten Mal angelassen wird und die Hydraulikflüssigkeit kalt ist, wird ihre Viskosität größer sein und sie ist dicker, schwerer und dichter. Wenn kalte Hydraulikflüssigkeit durch die Hydraulikpumpe 30 aus dem Reservoir 12 gezogen wird, neigt sie dazu langsam zu fließen und gelangt nicht einfach durch die Wandungen des Filterelements 32. Darüber hinaus werden große Verunreinigungspartikel in der Hydraulikflüssigkeit nicht leicht durch die Wandungen des Filterelements 32 gelangen. Während dieses Zeitabschnitts geschieht es, dass der starke durch die Hydraulikpumpe 30 erzeugte Zug bewirkt, dass das Verschlusselement 60 öffnet und es kalter Hydraulikflüssigkeit erlaubt, durch es hindurch und durch das Siebelement 36 zurück zu der Hydraulikpumpe 30 zu fließen (siehe Figur 5).

Weiter mit Blick auf Figur 5, in der Strom kalter Hydraulikflüssigkeit durch Pfeile gezeigt wird, kann gesehen werden, dass die Hydraulikflüssigkeit von dem Reservoir 12 in das Filtergehäuse 16 des Getriebegehäuses 10, welches den Filterzusammenbau 18 umschließt, herumfließt, aber nicht durch das Filterelement 32 gelangt, da seine Viskosität zu hoch ist. Wenn der durch die Hydraulikpumpe 30 erzeugte Zug ansteigt, öffnet das Umgehungsventil 38 und erlaubt es der kalten Hydraulikflüssigkeit durch das Siebelement 36, durch den hohlen Kern des Filterelements 32 aus dem Endbereich der Kartusche 34 hinaus und durch den Ansaugstutzen 66 zu der Hydraulikpumpe 30 zu fließen. In der bevorzugten Ausführungsform wirkt das Umgehungsventil 38, um die Hydraulikflüssigkeit zu dem Einlassgebiet des Siebelements 36 zu leiten, wenn der Hydrauliköldruck ungefähr 5 Pfund pro Quadratinch (34 474 N/m²) gegenüber Vakuum beträgt. Das Umgehungsventil 38 dient somit dazu, es der kalten Hydraulikflüssigkeit zu erlauben, durch das Siebelement 36 aber nicht durch das Filterelement 32 zu gelangen.

Wenn sich die Hydraulikflüssigkeit ausreichend erwärmt hat, wird ihre Viskosität fallen und der durch die Hydraulikpumpe erzeugte Zug wird nachlassen und es dem Verschlusselement 60 des Umgehungsventils 38 erlauben, zu schließen. Wenn dieser Fall eintritt, wird die Hydraulikflüssigkeit beginnen, durch die Wandungen des Filterelements 32 zu strömen. Wie dies durch die Pfeile, die den Hydraulikflüssigkeitsstrom in Figur 6 zeigen, verdeutlicht wird, wird die Hydraulikflüssigkeit durch die Wandungen des Filterelements 32, entlang des hohlen Kerns, aus dem Endbereich der Kartusche 34 heraus und durch den Ansaugstutzen 66 zu der Pumpe 30 gezogen. Danach gibt die Hydraulikpumpe 30 die Hydraulikflüssigkeit an das Reservoir 12 in dem Getriebegehäuse 10 zurück.

In der bevorzugten Ausführungsform, dient das Umgehungsventil 38 dazu, die Hydraulikflüssigkeit durch das Einlassgebiet des Filterelements 32 zu leiten, wenn der Hydraulikflüssigkeitsdruck unter 5 Pfund pro Quadratinch (34 474 N/m²) bezogen auf das Vakuum beträgt. Darüber hinaus ist das Siebelement 36 gemäß der bevorzugten Ausführungsform derart ausgebildet, dass es Verunreinigungen in der Hydraulikflüssigkeit herausfiltert, welche eine Partikelgröße zwischen 60 und 100 Mikrometer aufweisen, und das Filterelement 32 derart ausgebildet ist, dass es Verunreinigungen einer Größe von 5 Mikrometer und größer herausfiltert.

Da der Filterzusammenbau 18 in dem Getriebegehäuse 10 in dem Filtergehäuse 16 vorgesehen ist, werden die notwendigen Leitungshalterungen und der Bauraum, der benötigt wird, um den Filterzusammenbau 18 anzubringen, minimiert, wodurch Bauraum für andere Fahrzeugbaugruppen verbleibt. Der aufschraubbare, entfernbare Deckel 28 ermöglicht einen einfachen Zugang zu dem Filterzusammenbau 18 für Service- und Wartungszwecke. Da der Filterzusammenbau 18 in dem Filterkopf 27 leicht entfernt und ersetzt werden kann, wird die Wartung erleichtert. Die Anordnung des Filterzusammenbaus 18 in dem Reservoir 12 in dem Getriebegehäuse 10 stellt sicher, dass er in der Hydraulikflüssigkeit untergetaucht ist und das Kavitation und/oder ein Leerlauf der Hydraulikpumpe augrund eines Luftziehens verringert wird.

## Patentansprüche

1. Getriebegehäuse (10) mit einem unteren und einem oberen Bereich, einem Reservoir (12) für Hydraulikflüssigkeit, das in dem unteren Bereich angeordnet ist, einem Filtergehäuse (16), das in dem unteren Bereich angeordnet ist, mit dem Reservoir (12) in Verbindung steht und eine Öffnung (20) aufweist, und mit einem Filterzusammenbau (18), welcher durch die Öffnung (20) in das Filtergehäuse (16) eingebracht werden kann, **dadurch gekennzeichnet, dass** ein Filterkopf (26) vorgesehen ist, welcher mit dem Gebriebegehäuse (10) verbunden ist und es dem Filterzusammenbau (18) erlaubt, sich in einer vorkragenden Art und Weise in das Reservoir (12) erstrecken, und der Filterzusammenbau (18) ein Filterelement (32) mit einem Einlassbereich und einem Auslassbereich, ein Siebelement (36) und ein Umgehungsventil (38) aufweist, wobei das Siebelement (36) im Innern des Filterelements (32) angeordnet ist und das Umgehungsventil (38) entweder einen Hydraulikfluss durch das Filterelement (32) oder durch das Siebelement (36) erlaubt.

2. Getriebegehäuse nach Anspruch 1, **dadurch gekennzeichnet, dass** der Filterzusammenbau (18) in einem Filterkopf (26) mit einem entfernbaren Deckel (28) angeordnet ist.

3. Getriebegehäuse nach Anspruch 2, **dadurch gekennzeichnet, dass** der Deckel (28) auf den Filterkopf (26) aufschraubbar ist.

4. Getriebegehäuse nach Anspruch 2 oder 3, **dadurch gekennzeichnet, dass** der Filterkopf (26) mit dem Getriebegehäuse (10) lösbar verbunden bzw. verschraubt ist.

5. Getriebegehäuse nach einem oder mehreren der vorherigen Ansprüche, **dadurch gekennzeichnet, dass** das Umgehungsventil (38) druckabhängig bzw. in der Art eines druckgesteuerten Ventils ausgebildet ist.

6. Getriebegehäuse nach einem oder mehreren vorherigen Ansprüche, **dadurch gekennzeichnet, dass** der Filterzusammenbau (18) in der Art eines Einweg- bzw. Wegwerfelements ausgebildet ist.

7. Getriebegehäuse nach einem oder mehreren der vorherigen Ansprüche, **dadurch gekennzeichnet, dass** der Filterzusammenbau (18) verbrennbar ist.

8. Getriebegehäuses nach einem oder mehreren der vorherigen Ansprüche, **dadurch gekennzeichnet, dass** das Siebelement (36) einen Einlassbereich, der wirksam mit dem Einlass des Filterelements, und einem Auslassbereich der wirksam mit dem Auslassbereich des Filterelements verbunden ist, aufweist.

9. Getriebegehäuse nach einem oder mehreren der vorherigen Ansprüche, **dadurch gekennzeichnet, dass** das Umgehungsventil Hydraulikflüssigkeit zu dem Einlassbereich des Siebelements (36) leitet, wenn ein bestimmter Hydraulikflüssigkeitsdruck erreicht ist bzw. überstiegen wird bzw. Hydraulikflüssigkeit zu dem Einlassbereich des Filterelements (32) leitet, wenn ein bestimmter Hydraulikflüssigkeitsdruck unterschritten wird bzw. solange er ein bestimmter Hydraulikflüssigkeitsdruck nicht erreicht wird.

10. Getriebegehäuse nach einem oder mehreren der vorherigen Ansprüche, **dadurch gekennzeichnet, dass** das Siebelement (36) an den Einlassbereich des Filterelements (32) angrenzt bzw. in diesem angeordnet ist.

11. Gebriebegehäuse nach einem oder mehreren der vorherigen Ansprüche, **dadurch gekennzeichnet, dass** das Filterelement (32) im Wesentlichen in der Art einer zylindrischen Schürze mit einem hohlen, zentralen Kern ausgebildet ist, wobei der Kern gegenüberliegende erste und zweite Endbereiche aufweist und wobei der erste Endbereich als ein Einlassbereich des Filterelements (32) ausgebildet ist.

12. Getriebegehäuse nach einem oder mehreren der vorherigen Ansprüche, **dadurch gekennzeichnet, dass** das Siebelement (36) zumindest teilweise oder vollständig in dem zweiten Endbereich des Filterelements (32) aufgenommen wird und/oder das Umgehungsventil (38) zumindest teilweise oder vollständig in dem Einlassbereich des Siebelements (36) aufgenommen wird.

13. Fahrzeug, insbesondere ein Kompaktfahrzeug, mit einem Getriebegehäuse (10) nach einem oder mehreren der Ansprüche 1 bis 12.

## Claims

1. Gearbox housing (10) comprising a lower and an upper region, a reservoir (12) for hydraulic fluid, which is disposed in the lower region, a filter housing (16), which is disposed in the lower region, is connected to the reservoir (12) and has an opening (20), and comprising a filter assembly (18), which can be introduced into the filter housing (16) through the opening (20), **characterized in that** a filter head (26) is provided, which is connected to the gearbox housing (10) and allows the filter assembly (18) to extend prominently into the reservoir (12), and the filter assembly (18) having a filter element (32) having an inlet region and an outlet region, a screen element (36) and a by-pass valve (38), the screen element (36) being disposed inside the filter element (32) and the by-pass valve (38) allowing a hydraulic flow either through the filter element (32) or through the screen element (36).

2. Gearbox housing according to Claim 1, **characterized in that** the filter assembly (18) is disposed in a filter head (26) having a removable cap (28).

3. Gearbox housing according to Claim 2, **characterized in that** the cap (28) can be screwed onto the filter head (26).

4. Gearbox housing according to Claim 2 or 3, **characterized in that** the filter head (26) can be detachably connected and/or bolted to the gearbox housing (10).

5. Gearbox housing according to one or more of the previous claims, **characterized in that** the by-pass valve (38) is of pressure-dependent configuration or is configured in the style of a pressure-controlled valve.

6. Gearbox housing according to one or more of the previous claims, **characterized in that** the filter assembly (18) is configured in the style of a disposable or throw-away element.

7. Gearbox housing according to one or more of the previous claims, **characterized in that** the filter assembly (18) is combustible.

8. Gearbox housing according to one or more of the previous claims, **characterized in that** the screen element (36) has an inlet region, which is operatively connected to the inlet of the filter element, and an outlet region, which is operatively connected to the outlet region of the filter element.

9. Gearbox housing according to one or more of the previous claims, **characterized in that** the by-pass valve conducts hydraulic fluid to the inlet region of the screen element (36) when a specific hydraulic fluid pressure is reached or is exceeded, or conducts hydraulic fluid to the inlet region of the filter element (32) when a specific hydraulic fluid pressure is fallen below or as long as a specific hydraulic fluid pressure is not reached.

10. Gearbox housing according to one or more of the previous claims, **characterized in that** the screen element (36) adjoins or is disposed in the inlet region of the filter element (32).

11. Gearbox housing according to one or more of the previous claims, **characterized in that** the filter element (32) is configured substantially in the style of a cylindrical skirt having a hollow, central core, the core having opposing first and second end regions and the first end region being configured as an inlet region of the filter element (32).

12. Gearbox housing according to one or more of the previous claims, **characterized in that** the screen element (36) is accommodated at least partially or fully in the second end region of the filter element (32), and/or the by-pass valve (38) is accommodated at least partially or fully in the inlet region of the screen element (36).

13. Vehicle, in particular a compact vehicle, comprising a gearbox housing (10) according to one or more of Claims 1 to 12.

## Revendications

1. Carter de boîte de vitesses (10) comprenant une zone inférieure et une zone supérieure, un réservoir (12) pour du liquide hydraulique, qui est disposé dans la zone inférieure, un boîtier de filtre (16), qui est disposé dans la zone inférieure, est en liaison avec le réservoir (12) et présente une ouverture (20), et un ensemble de filtre (18), qui peut être introduit par l'ouverture (20) dans le boîtier de filtre (16), **caractérisé en ce qu'**une tête de filtre (26) est prévue, laquelle est reliée au carter de boîte de vitesses (10) et permet à l'ensemble de filtre (18) de s'étendre dans le réservoir (12) d'une façon saillante et l'ensemble de filtre (18) présente un élément filtrant (32) avec une zone d'entrée et une zone de sortie, un élément de tamis (36) et une soupape de dérivation (38), l'élément de tamis (36) étant disposé à l'intérieur de l'élément filtrant (32) et la soupape de dérivation (38) permettant un flux hydraulique soit à travers l'élément filtrant (32) soit à travers l'élément de tamis (36).

2. Carter de boîte de vitesses selon la revendication 1, **caractérisé en ce que** l'ensemble de filtre (18) est disposé dans une tête de filtre (26) avec un couvercle (28) pouvant être enlevé.

3. Carter de boîte de vitesses selon la revendication 2, **caractérisé en ce que** le couvercle (28) peut être vissé sur le pot de filtre (26).

4. Carter de boîte de vitesses selon la revendication 2 ou 3, **caractérisé en ce que** la tête de filtre (26) est reliée et/ou vissée de façon amovible avec le carter de boîte de vitesses (10).

5. Carter de boîte de vitesses selon l'une quelconque ou plusieurs des revendications précédentes, **caractérisé en ce que** la soupape de dérivation (38) est dépendante de la pression et réalisée à la façon d'une vanne commandée par pression.

6. Carter de boîte de vitesses selon l'une quelconque ou plusieurs des revendications précédentes, **caractérisé en ce que** l'ensemble de filtre (18) est réalisé à la façon d'un élément à usage unique respectivement d'un élément jetable.

7. Carter de boîte de vitesses selon l'une quelconque ou plusieurs des revendications précédentes, **caractérisé en ce que** l'ensemble de filtre (18) est combustible.

8. Carter de boîte de vitesses selon l'une quelconque ou plusieurs des revendications précédentes, **caractérisé en ce que** l'élément de tamis (36) présente une zone d'entrée qui est reliée efficacement à l'entrée de l'élément filtrant et une zone de sortie qui est reliée efficacement à la zone de sortie de l'élément filtrant.

9. Carter de boîte de vitesses selon l'une quelconque ou plusieurs des revendications précédentes, **caractérisé en ce que** la soupape de dérivation conduit le liquide hydraulique vers la zone d'entrée de l'élément de tamis (36), lorsqu'une pression de liquide hydraulique définie est atteinte ou dépassée et guide le liquide hydraulique vers la zone d'entrée de l'élément filtrant (32) lorsqu'une pression de liquide hydraulique définie n'est pas dépassée ou aussi longtemps qu'elle n'a pas atteint une pression de liquide hydraulique définie.

10. Carter de boîte de vitesses selon l'une quelconque ou plusieurs des revendications précédentes, **caractérisé en ce que** l'élément de tamis (36) est contigu à la zone d'entrée de l'élément filtrant (32) ou est disposé dans celle-ci.

11. Carter de boîte de vitesses selon l'une quelconque ou plusieurs des revendications précédentes, **caractérisé en ce que** l'élément filtrant (32) est réalisé sensiblement à la façon d'un tablier cylindrique avec un noyau creux central, le noyau présentant des premières et des secondes zones d'extrémité opposées et la première zone d'extrémité étant conçue comme zone d'entrée de l'élément filtrant (32).

12. Carter de boîte de vitesses selon l'une quelconque ou plusieurs des revendications précédentes, **caractérisé en ce que** l'élément de tamis (36) est réceptionné au moins partiellement ou complètement dans la seconde zone d'extrémité de l'élément filtrant (32) et/ou la soupape de dérivation (38) est réceptionnée au moins partiellement ou complètement dans la zone d'entrée de l'élément de tamis (36).

13. Véhicule, en particulier un véhicule compact, comprenant un carter de boîte de vitesses (10) selon l'une quelconque ou plusieurs des revendications 1 à 12.
